## Europäisches Patentamt
## European Patent Office
## Office européen des brevets

(19)

(11) Veröffentlichungsnummer: **0 193 702**
**B1**

(12) **EUROPÄISCHE PATENTSCHRIFT**

(45) Veröffentlichungstag der Patentschrift:
**23.11.88**

(21) Anmeldenummer: **86100222.8**

(22) Anmeldetag: **09.01.86**

(51) Int. Cl.⁴: **F 16 K 37/00,** G 01 K 13/02,
G 05 D 23/13

(54) Wassermischarmatur, insbesondere Einhebelmischarmatur.

(30) Priorität: 04.03.85 DE 3507559
12.03.85 DE 3508680
16.04.85 DE 3513549

(43) Veröffentlichungstag der Anmeldung:
**10.09.86 Patentblatt 86/37**

(45) Bekanntmachung des Hinweises auf die Patenterteilung:
**23.11.88 Patentblatt 88/47**

(84) Benannte Vertragsstaaten:
**AT BE DE FR GB IT NL SE**

(56) Entgegenhaltungen:
**DE-A-3 045 531
DE-A-3 330 585
FR-A-2 476 929
US-A-4 406 398**

(73) Patentinhaber: **IDEAL- STANDARD GMBH,
Euskirchener Strasse 80, D-5300 Bonn 1 (DE)**

(72) Erfinder: **Bergmann, Konrad, Dr., zur Philippsburg
70, D-5560 Wittlich (DE)**

(74) Vertreter: **Gesthuysen, Hans Dieter, Dipl.- Ing.,
Patentanwälte Gesthuysen + von Rohr
Huyssenallee 15 Postfach 10 13 33, D-4300 Essen
1 (DE)**

EP 0 193 702 B1

LIBER, STOCKHOLM 1988

## Beschreibung

Die Erfindung betrifft eine Wassermischarmatur, insbesondere eine Einhebelmischarmatur, mit einerseits vorzugsweise zwei Wassereinlässen, zwei Wassereinlaßventilen, einer Mischkammer, einem Eischwasserauslaß, ggf. einem Wasserauslaßventil und mindestens einem Betätigungsorgan für die Wassereinlaßventile und ggf. das Wasserauslaßventil und mit andererseits einer elektronischen Temperaturmeßschaltung, wobei die Temperaturmeßschaltung einen im Mischwasserauslaß angeordneten Temperatursensor, eine Mischtemperaturanzeige und eine Stromquelle, z. B. eine Batterie oder einen Akkumulator, aufweist.

Wassermischarmaturen der in Rede stehenden Art sind für Waschbecken, Badewannen, Duschen, Bidets usw. bekannt. Sie dienen generell zur Mischung von über die Wassereinlässe zuströmendem Wasser unterschiedlicher Temperatur - Kaltwasser und Heißwasser - zu am Mischwasserauslaß ausströmendem Mischwasser einer gewünschten Temperatur. Damit man feststellen kann, wie hoch die Temperatur des Mischwassers ist, um sich beispielsweise nicht an zu heißem Wasser zu verbrühen, weisen die Wassermischarmaturen der Art, von der die Erfindung ausgeht, eine Temperaturmeßschaltung auf, zu der dann insbesondere auch eine Mischtemperaturanzeige gehört.

Im übrigen gilt generell, daß bei Wassermischarmaturen der in Rede stehenden Art früher durchweg jedem Wassereinlaßventil ein eigenes Betätigungsorgan in Form eines Regelhandgriffes zugeordnet war, daß aber heutzutage zunehmend Einhebelmischarmaturen Verwendung finden. Bei Einhebelmischarmaturen werden zumeist durch Drehung und Kippung eines einzigen Betätigungsorgans in Form eines Dreh- und Kipphebels die Wassereinlaßventile zur Erzielung der gewünschten Mischung und der gewünschten Menge eingestellt. Das Betätigungsorgan kann auch, statt als Dreh- und Kipphebel, als Dreh- und Schiebehebel ausgeführt sein.

Die bekannte Wassermischarmatur, von der die Erfindung ausgeht, ist sowohl als klassische Wassermischarmatur mit zwei Betätigungsorganen als auch als moderne Einhebelmischarmatur mit nur einem Betätigungsorgan bekannt (vgl. die DE-A-3 045 531, und zwar einerseits die Fig. 1 bis 4, andererseits die Fig. 7 und 8).

Dabei ragt der Temperatursensor, der hier als Widerstandsmeßfühler ausgeführt ist, in das freie Ende des Mischwasserauslasses hinein. Der Temperatursensor ist mit Verbindungsleitungen mit der übrigen Temperaturmeßschaltung verbunden, die an der Rückseite der Wassermischarmatur angeordnet ist. Die Temperaturmeßschaltung weist eine Brückenschaltung auf, mit der der Sollwert der Temperatur des Mischwassers eingestellt werden kann. Jedem der Wassereinlaßventile bzw. der entsprechenden Betätigungsorgane zugeordnet bzw. auf den entsprechenden Seiten des einen Betätigungsorgans angeordnet sind optische Anzeigeelemente, vorzugsweise farbige Lämpchen, die eine Aussage über die Temperatur des Mischwassers machen. Je nach dem, ob der Sollwert der Temperatur des Mischwassers überschritten oder unterschritten ist, leuchtet das optische Anzeigeelement auf, dessen zugeordnetes Wassereinlaßventil einer Änderung der Einstellung bedarf.

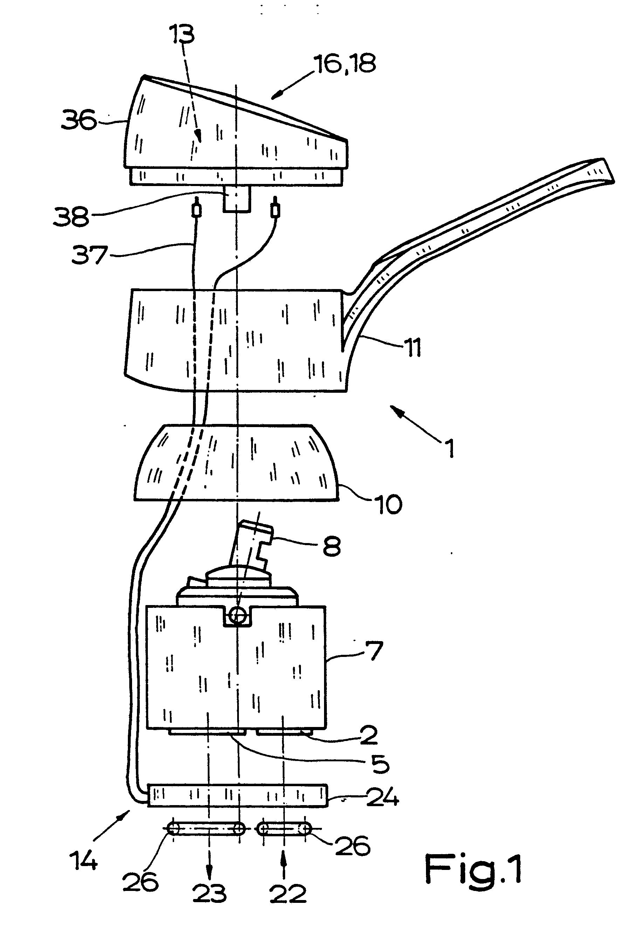

Bei der bekannten, zuvor beschriebenen Wassermischarmatur weist die Temperaturmeßschaltung als Stromquelle eine Batterie oder einen Akkumulator auf. (Batterie steht hier und im folgenden immer für ein Primärelement, das nicht aufladbar ist, während Akkumulator hier und im folgenden immer für ein Sekundärelement steht, das wieder aufladbar ist). Um den Stromverbrauch so gering wie möglich zu halten, wird zumindest die Mischtemperaturanzeige als größter Stromverbraucher, unter Umständen aber auch die Temperaturmeßschaltung insgesamt, nur eingeschaltet, wenn die Wassermischarmatur in Betrieb ist. Dieses Einschalten erfolgt mittels eines die Strömung am Mischwasserauslaß erfassenden Strömungsfühlers (vgl. Fig. 1 der DE-A-3 045 531). Nur bei einer ausreichenden Strömung ist also die Temperaturmeßschaltung mit der Mischtemperaturanzeige aktiviert.

Im übrigen ist es bei einer der zuvor erläuterten Wassermischarmatur entsprechenden Wassermischarmatur bekannt, zum Einschalten und Ausschalten der Temperaturmeßschaltung jedem Betätigungsorgan einen elektromechanischen, die Stellung des Betätigungsorgans abtastenden Schalter zuzuordnen (vgl. die US-A-4 406 398), so daß eine Aktivierung der Temperaturmeßschaltung überhaupt nur dann erfolgt wenn das Betätigungsorgan bzw. zumindest ein Betätigungsorgan in Öffnungsrichtung betätigt wird.

Die eingangs erläuterte Wassermischarmatur, von der die Erfindung ausgeht, erfordert trotz der vorgesehenen Stromsparmaßnahmen ein häufiges Wechseln der Batterie bzw. ein häufiges Aufladen des Akkumulators. Die Konstruktion insgesamt erfordert relativ weitgehende Änderungen an der Wassermischarmatur, unter anderem im Bereich des Mischwasserauslasses und die mit der Mischtemperaturanzeige dieser Wassermischarmatur gewonnene Information ist für normale Anwendungsfälle nicht besonders geeignet. Insgesamt ist also die eingangs erläuterte bekannte Wassermischarmatur für eine weite Verbreitung in der Praxis nicht geeignet.

Der Erfindung liegt nun die Aufgabe zugrunde, eine Wassermischarmatur mit einer elektronischen Temperaturmeßschaltung anzugeben, die den praktischen Anforderungen in elektronischschaltungstechnischer, mechanisch-konstruktiver und anwendungstechnischer Hinsicht optimal entspricht, insbesondere, aber nicht nur, unter Berücksichtigung der besonderen Gegebenheiten bei Einhebelmischarmaturen.

Die erfindungsgemäße Wassermischarmatur, bei der die zuvor aufgezeigte Aufgabe gelöst ist, ist nun zunächst und im wesentlichen dadurch gekennzeichnet, daß die Temperaturmeßschaltung zusätzlich zu der als Batterie oder Akkumulator ausgeführten ersten Stromquelle eine Solarzelle oder mehrere Solarzellen als weitere Stromquelle aufweist und oberhalb eines vorgegebenen oberen Helligkeitsgrenzwertes nur die Solarzelle als Stromquelle für die Temperaturießschaltung wirksam ist. Vorzugsweise ist zusätzlich dafür gesorgt, daß unterhalb eines vorgegebenen mittleren Helligkeitsgrenzwertes nur die Batterie bzw. der Akkumulator als Stromquelle für die Temperaturmeßschaltung wirksam ist und/oder daß unterhalb eines vorgegebenen unteren Helligkeitsgrenzwertes weder die Solarzelle noch die Batterie bzw. der Akkumulator als Stromquelle für die Temperaturmeßschaltung wirksam sind.

Der wesentliche Erfindungsgedanke ist also der, als Stromquelle für die Temperaturmeßschaltung zusätzlich zu der Batterie oder dem Akkumulator noch eine Solarzelle oder mehrere Solarzellen vorzusehen und dafür Sorge zu tragen, daß oberhalb eines vorgegebenen oberen Helligkeitsgrenzwertes, wenn es also hinreichend hell ist, nur die Solarzelle bzw. die Solarzellen als Stromquelle für die Temperaturmeßschaltung wirksam ist. Ist ergänzend realisiert, daß unterhalb eines vorgegebenen mittleren Helligkeitsgrenzwertes nur die Batterie bzw. der Akkumulator als Stromquelle für die Temperaturmeßschaltung wirksam ist und unterhalb eines vorgegebenen unteren Helligkeitsgrenzwertes weder die Solarzelle noch die Batterie bzw. der Akkumulator als Stromquelle für die Temperatumeßschaltung wirksam sind, so wird insgesamt ein minimaler Stromverbrauch erreicht. Oberhalb eines vorgegebenen oberen Helligkeitsgrenzwertes, wenn es also hinreichend hell ist, arbeitet die Temperaturmeßschaltung, ohne die Batterie bzw den Akkumulator zu belasten. Unterhalb eines Vorgegebenen mittleren Helligkeitsgrenzwertes und oberhalb eines vorgegebenen unteren Helligkeitsgrenzwertes, wenn es nicht mehr hinreichend hell für die Solarzelle bzw. die Solarzellen ist, gleichwohl noch eine Inbetriebnahme der Wassermischarmatur möglich ist, dient nur die Batterie bzw. der Akkumulator als Stromquelle für die Temperaturmeßschaltung, aber eben dann und nur dann, wenn die Helligkeit unterhalb des mittleren Helligkeitsgrenzwertes und oberhalb des unteren Helligkeitsgrenzwertes liegt. Liegt die Helligkeit unterhalb des unteren Helligkeitsgrenzwertes, so gilt, daß einerseits die Solarzelle bzw. die Solarzellen nicht mehr als Stromquelle für die Temperaturmeßschaltung dienen können, daß andererseits die Batterie bzw. der Akkumulator nicht mehr als Stromquelle für die Temperaturmeßschaltung dienen soll.

Es gibt nun eine Vielzahl von Möglichkeiten, die erfindungsgemäße Wassermischarmatur auszugestalten und weiterzubilden, was im folgenden anhand einer lediglich Ausführungsbeispiele darstellenden Zeichnung weiter erläutert wird; es zeigen

Fig. 1     in einer schematischen Sprengdarstellung ein erstes bevorzugtes Ausführungsbeispiel einer erfindungsqemäßen Wassermischarmatur in der Ausführungsform als Einhebelmischarmatur,

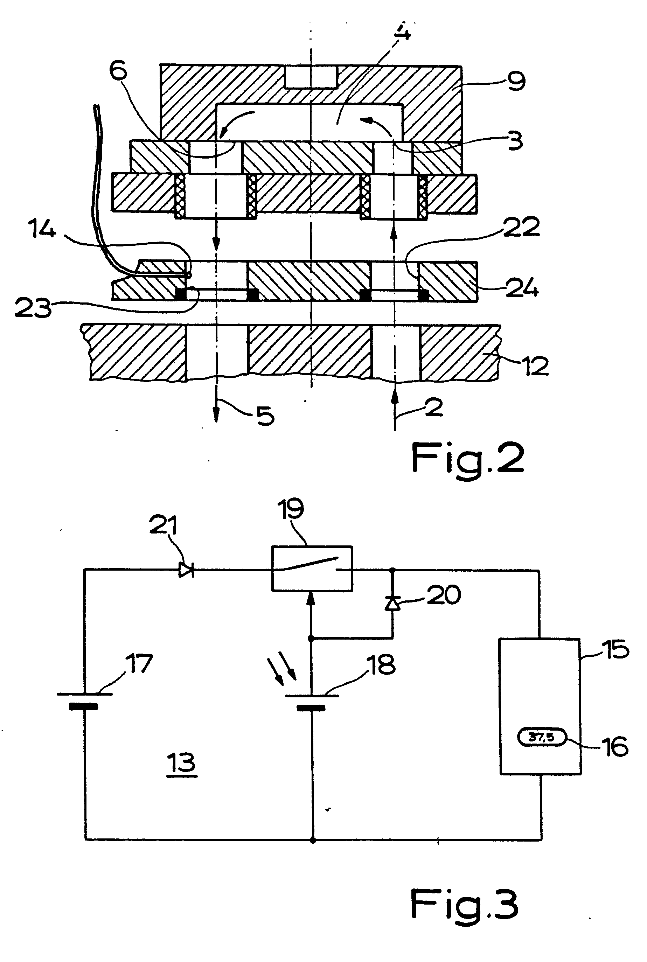

Fig. 2     im Schnitt, ausschnittweise, stark vergrößert, den unteren Teil einer Kartusche einer Wassermischarmatur gemäß Fig. 1,

Fig. 3     ein Blockschaltbild der Temperaturmeßschaltung der Wassermischarmatur nach Fig. 1,

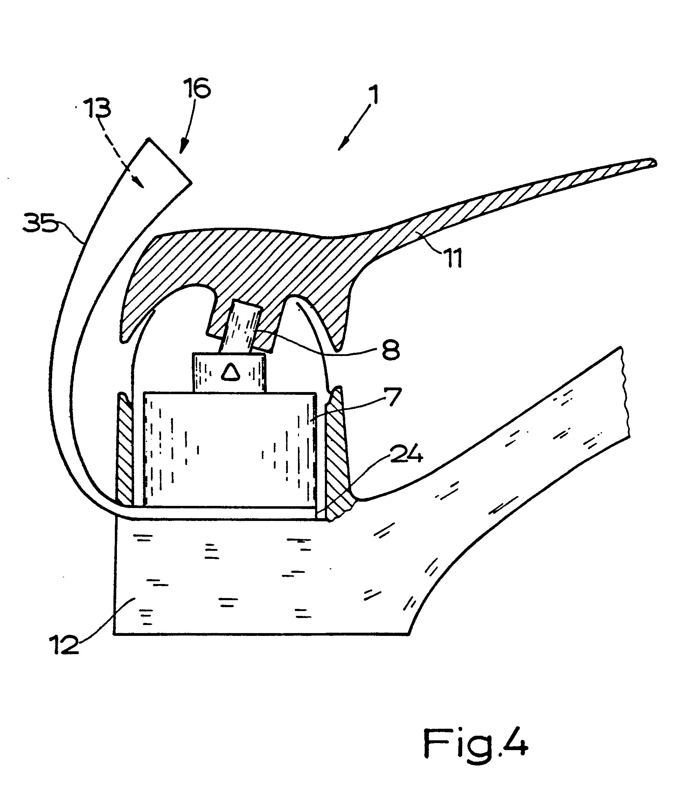

Fig. 4     in schematischer Darstellung ein weiteres Ausführungsbeispiel einer erfindungsgemäßen Wassermischarmatur in der Ausführungsform als Einhebelmischarmatur,

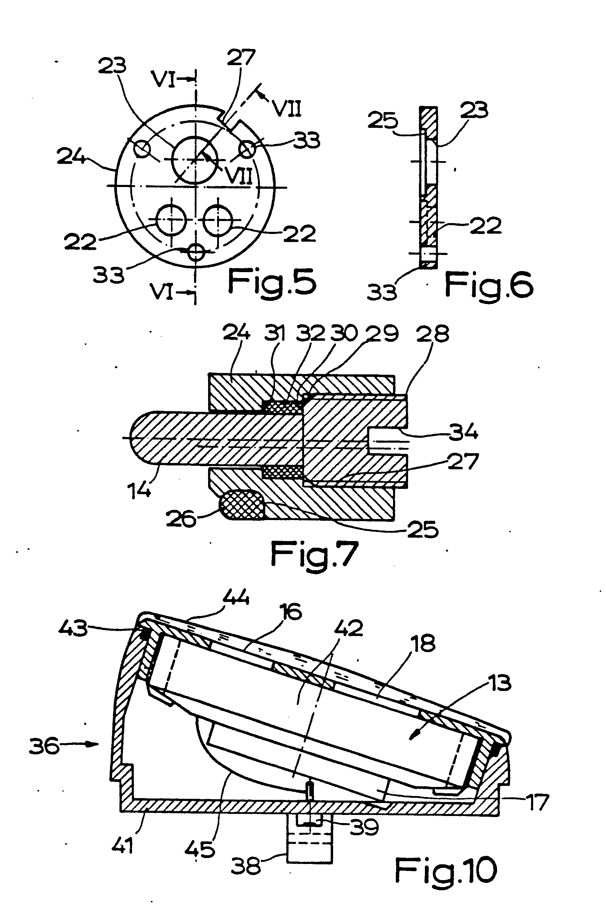

Fig. 5     in detaillierter Darstellung eine Sensorplatte für eine Wassermischarmatur gemäß den Fig. 1 bzw. 4,

Fig. 6     den Gegenstand nach Fig. 5 im Schnitt entlang der Linie VI - VI,

Fig. 7     den Gegenstand nach Fig. 5 vergrößert und im Schnitt entlang der Linie VII - VII mit eingesetztem Temperatursensor,

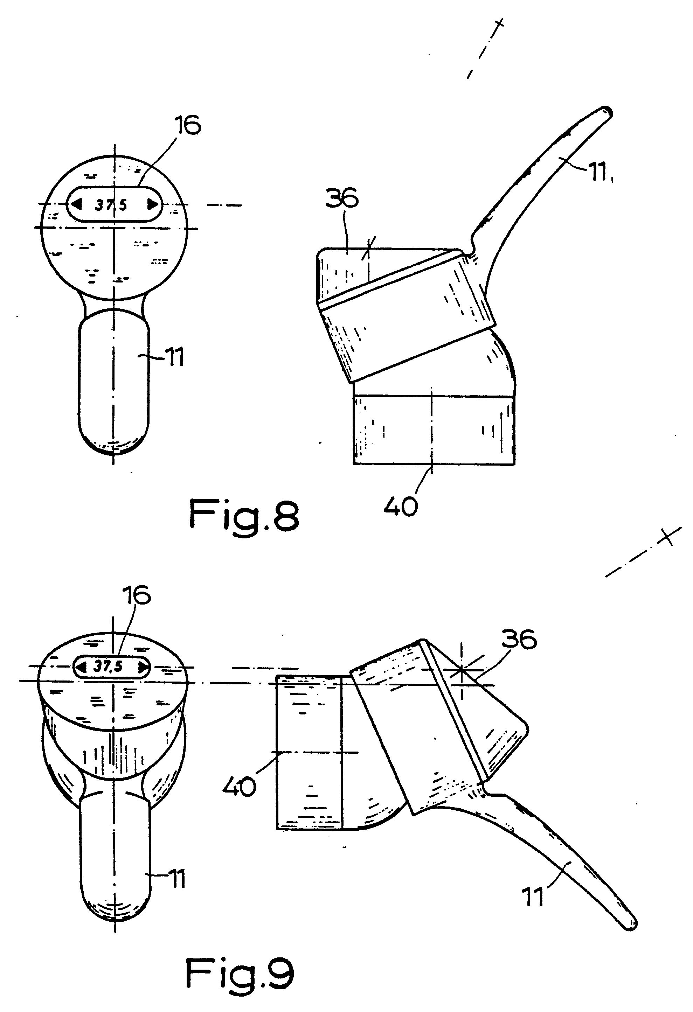

Fig. 8     den Gegenstand nach Fig. 1, zusammengesetzt und angewandt für ein Waschbecken,

Fig. 9     den Gegenstand nach Fig. 1, zusammengesetzt und angewandt für eine Badewanne oder eine Dusche, und

Fig. 10     in stark vergrößerter Darstellung ein Aufsatzteil für eine Wassermischarmatur gemäß Fig. 1.

Die Lehre der Erfindung befaßt sich allgemein mit Wassermischarmaturen und wird nachfolgend nur der Einfachheit halber anhand von Ausführungsbeispielen von Einhebelmischarmaturen erläutert. Eine Vielzahl von Aspekten der Lehre der Erfindung sind aber in entsprechender Weise auch bei Wassermischarmaturen mit zwei Betätigungsorganen zu verwirklichen. Auch kann die Lehre der Erfindung bei Wasserarmaturen angewendet werden, denen bereits Mischwasser bzw. erwärmtes Wasser zugeführt wird. Weiter kann die Lehre der Erfindung aber auch bei für andere Zwecke eingesetzten Temperaturmeßschaltungen, z. B. für Raumtemperaturanzeigen, auch in Verbindung mit Uhren, für Körperthermometer, für Thermoflaschen, für Babyflaschen usw., angewendet werden. Die erfindungsgemäße Art der Stromversorgung einer Temperaturmeßschaltung kann schließlich ohne weiteres auch auf andere Meßschaltungen übertragen werden, z. B. auf Meßschaltungen für Barometer und Hygrometer.

Die in Fig. 1 in einem ersten bevorzugten Ausführungsbeispiel als Einhebelmischarmatur dargestellte Wassermischarmatur 1 läßt sich in ihrem grundsätzlichen Aufbau in Verbindung mit Fig. 2 recht gut erläutern. Die Wassermischarmatur 1 weist zunächst zwei Wassereinlässe 2 und zwei den Wassereinlässen 2 zugeordnete Wassereinlaßventile 3 auf. In den Fig. 1 und 2 ist jeweils nur ein Wassereinlaß 2 und ein Wassereinlaßventil 3 zu erkennen. Einer der Wassereinlässe 2 ist an einen Heißwasserzulauf angeschlossen, der andere Wassereinlaß 2 ist an einen Kaltwasserzulauf angeschlossen. Die Wassereinlaßventile 3 werden im hier dargestellten Ausführungsbeispiel einer Einhebelmischarmatur von den in unterschiedliche Überdeckung bringbaren Öffnungen in aufeinander verschiebbaren Keramikscheiben gebildet. Diese Technik ist seit langem als solche bekannt und bedarf hier keiner Weiteren Erläuterung.

In Fig. 2 ist gut zu erkennen, daß eine Mischkammer 4 vorgesehen ist, die einerseits mit den Wassereinlässen 2 in Verbindung steht, mit der andererseits ein Mischwasserauslaß 5, und zwar über ein Wasserauslaßventil 6, in Verbindung steht. Die zuvor erläuterten Teile der Wassermischarmatur 1 sind in einer als geschlossener Block ausgebildeten Kartusche 7 zusammengefaßt. Fig. 1 zeigt, daß von der Kartusche 7 nach oben nur ein Betätigungshebel 8 herausragt, mit dessen Hilfe eine in Fig. 2 oben dargestellte Keramikscheibe 9 zum Öffnen und Schließen der Wassereinlaßventile 3 und des Wasserauslaßventils 6 bewegbar ist. Auf die Kartusche 7 ist ein Abstands und Schwenkring 10 aufgesetzt, auf den seinerseits dann ein Betätigungsorgan 11 aufgesetzt ist. Mittels des Betätigungsorgans 11 werden über den Betätigungshebel 8 die Wassereinlaßventile 3 und das Wasserauslaßventil 6 betätigt. Wegen der Ausführung der Wassermischarmatur 1 als Einhebelmischarmatur ist das Betätigungsorgan hier ein Dreh- und Kipphebel. Fig. 2 zeigt im übrigen noch angedeutet ein Gehäuse 12, das in Fig. 1 nicht dargestellt ist.

Unter Heranziehung von Fig. 3 kann nun auch die elektronisch-schaltungstechnische Seite der Wassermischarmatur 1 erläutert werden. Fig. 3 zeigt das Blockschaltbild einer elektronischen Temperaturmeßschaltung 13 mit einem im Mischwasserauslaß 5 angeordneten Temperatursensor 14; der Temperatursensor 14 ist schematisch in Fig. 2 zu erkennen, im Blockschaltbild nach Fig. 3 jedoch Teil eines Temperaturmeßblocks 15. Teil des Temperaturmeßblocks 15 in Fig. 3 ist auch eine Mischtemperaturanzeige 16.

Fig. 3 läßt gut erkennen, daß die Temperaturmeßschaltung 13 als Stromquelle zunächst eine Batterie 17 aufweist. Weiter zeigt dann die Fig. 3, daß nach der Lehre der Erfindung die Temperaturmeßschaltung 13 zusätzlich zu der als Batterie 17 ausgeführten ersten Stromquelle eine Solarzelle 18 als weitere Stromquelle aufweist. Durch schaltungstechnische Maßnahmen, die weiter unten erläutert werden, ist sichergestellt, daß oberhalb eines vorgegebenen oberen Helligkeitsgrenzwertes nur die Solarzelle 18 als Stromquelle für die Temperaturmeßschaltung 13 wirksam ist, daß unterhalb eines vorgegebenen mittleren Helligkeitsgrenzwertes nur die Batterie 17 als Stromquelle für die Temperaturmeßschaltung 13 wirksam ist und daß unterhalb eines vorgegebenen unteren Helligkeitsgrenzwertes weder die Solarzelle 18 noch die Batterie 17 als Stromquelle für die Temperaturmeßschaltung 13 wirksam sind.

Wie die Fig. 3 weiter zeigt, gehören im dargestellten Ausführungsbeispiel zu der Temperaturmeßschaltung 13 noch ein Hilfsschalter 19 sowie zwei Schaltdioden 20, 21.

Liegt die Helligkeit, der die erfindungsgemäße Wassermischarmatur 1 ausgesetzt ist, oberhalb eines vorgegebenen oberen Helligkeitsgrenzwertes, so ist nur die Solarzelle 18 als Stromquelle für die Temperaturmeßschaltung 13 wirksam, obwohl der Hilfsschalter 19 geschlossen ist. Dies ist dadurch erreicht, daß die Spannung der Solarzelle 18 größer ist als die Spannung der Batterie 17, so daß zwar von der Solarzelle 18 Strom über die Schaltdiode 20 und den Temperaturmeßblock 15 fließen kann, die Schaltdiode 21 jedoch verhindert, daß Strom von der Batterie 17 fließen kann. Die Schaltdiode 21 verhindert natürlich auch, daß Strom von der Solarzelle 18 über die Batterie 17 fließen kann.

Wenn die Helligkeit, der die Wassermischarmatur 1 ausgesetzt ist, unterhalb eines vorgegebenen oberen Helligkeitsgrenzwertes, aber oberhalb eines vorgegebenen mittleren Helligkeitsgrenzwertes liegt, so sind die Solarzelle 18 und die Batterie 17 als Stromquellen für die Temperaturmeßschaltung 13 wirksam. Das resultiert aus den Strom-Spannungs-Kennlinien von Solarzellen.

Liegt nun die Helligkeit, der die Wassermischarmatur 1 ausgesetzt ist, unterhalb eines vorgegebenen mittleren Helligkeitsgrenzwertes, so ist nur die Batterie 18 als Stromquelle für die Temperaturmeßschaltung 13 wirksam. Das resultiert daraus, daß nunmehr die Spannung der Batterie 17 größer ist als die Spannung der Solarzelle 18, so daß die Schaltdiode 20 verhindert, daß von der Solarzelle 18 ein Strom fließt. Die Schaltdiode 20 verhindert natürlich auch, daß von der Batterie 17 Strom über die Solarzelle 18 fließt.

Das, was zuvor beschrieben worden ist, gilt in Strenge nur, wenn die Schaltdioden 20, 21 "ideale Schalter" wären, was sie jedoch nicht sind. Tatsächlich erfolgt deshalb dann, wenn die Helligkeit den mittleren Helligkeitsgrenzwert unterschreitet, nicht schlagartig die Stromversorgung der Temperaturmeßschaltung 13 ausschließlich durch die Batterie 18, vielmehr gibt es einen Übergangsbereich, in dem auch noch die Solarzelle 18 als Stromquelle für die Temperaturmeßschaltung 13 wirksam ist. Entsprechendes gilt auch umgekehrt, d. h. dann, wenn die Helligkeit den oberen Helligkeitsgrenzwert - von unten kommend - überschreitet.

Wenn die Wassermischarmatur 1 einer Helligkeit ausgesetzt ist, die unterhalb eines vorgegebenen unteren Helligkeitsgrenzwertes liegt, die Beleuchtungsstärke beispielsweise kleiner als 5 lux ist, dann sind weder die Solarzelle 18 noch die Batterie 17 als Stromquelle für die Temperaturmeßschaltung 13 wirksam. Einerseits reicht nämlich dann die Spannung der Solarzelle 18 nicht aus, andererseits ist dann, gesteuert von der Solarzelle 18, der Hilfsschalter 19 geöffnet, so daß von der Batterie 18 kein Strom fließen kann.

Die vorstehenden Erläuterungen zu der schaltungstechnischen Ausgestaltung der erfindungsgemäßen Wassermischarmatur 1 sind unabhängig davon, ob im übrigen bei Nichtgebrauch der Wassermischarmatur 1 eine anderweitige Ausschaltung der Temperaturmeßschaltung 13 erfolgt. Im Stand der Technik von dem die Erfindung ausgeht, ist für diese Funktion ein Strömungsfühler dem Mischwasserauslaß 5 zugeordnet. Das ist eine aufwendige Lösung. Eine weitere Lehre der Erfindung, der besondere und eigenständige Bedeutung zukommt, geht daher dahin, daß ein die Temperaturmeßschaltung insgesamt ein- und ausschaltender, die Stellung der Wassereinlaßventile 3 und/oder des Wasserauslaßventils 6 und/oder des Betätigungsorgans 11 abtastender, elektromechanischer Hauptschalter vorgesehen ist. In der bevorzugten Ausführungsform als Einhebelmischarmatur, die in den Figuren dargestellt ist, tastet der Hauptschalter zweckmäßigerweise die Kippstellung des als Betätigungsorgan 11 dienenden Dreh- und Kipphebels ab. Damit ist auf sehr einfache Weise sichergestellt, daß Strom wirklich nur dann verbraucht wird, wenn dies auch nötig ist, wenn also am Mischwasserauslaß 5 überhaupt eine Mischwassertemperatur zu messen ist.

In in Fig. 3 dargestellten Ausführungsbeispiel der Temperaturmeßschaltung 13 einer erfindungsgemäßen Wassermischarmatur 1 ist als erste Stromquelle eine Batterie 17 vorgesehen. Statt dessen könnte die erste Stromquelle auch als Akkumulator ausgeführt sein. Dann könnte eine Abwandlung der Temperaturmeßschaltung 13 dahingehend zweckmäßig sein, daß der Akkumulator von der Solarzelle 18 aufgeladen werden kann.

Grundsätzlich kommen bei der erfindungsgemäßen Wassermischarmatur 1 als Mischtemperaturanzeige 16 die im Stand der Technik bekannten Lämpchen in Frage. Moderner Technik entspricht es jedoch, die Mischtemperaturanzeige 16 als Flüssigkristall-Ziffernanzeige oder als Leuchtdioden-Ziffernanzeige auszubilden. Eine Flüssigkristall-Ziffernanzeige hat einen geringeren Stromverbrauch, bedarf aber einer zusätzlichen Beleuchtung, um bei Dunkelheit abgelesen werden zu können. Eine Leuchtdioden-Ziffernanzeige hat dauernd einen etwas höheren Stromverbrauch, kann aber zwang los auch im Dunkeln abgelesen werden. Es hängt vom jeweiligen Anwendungsfall ab, welche der beiden Möglichkeiten man wählt.

Nach einer weiteren Lehre der Erfindung, der besondere und eigenständige Bedeutung zukommt, kann eine Wassermischarmatur gemäß der Erfindung für Badewannen od. dgl. dadurch besonders ausgestaltet sein, daß an die Temperaturmeßschaltung ein den Wasserstand in der Badewanne od. dgl. abtastender, einen Soll-Wasserstand vorgebender Wasserstandssensor angeschlossen und von der Temperaturmeßschaltung bei Erreichen des Soll-Wasserstands ein akustisches Warnsignal, ein Schaltsignal od. dgl. abgebbar ist.

Generell gilt für Wassermischarmaturen 1 der erfindungsgemäßen Art, also keineswegs nur für Einhebelmischarmaturen, daß der Temperatursensor 14 in einem den Mischwasserauslaß 5 umgebenden, vorzugsweise nächst der Mischkammer 4 angeordneten Ring eingesetzt sein kann. In der Ausführung als Einhebelmischarmatur empfiehlt sich dabei eine Ausgestaltung, bei der dieser Ring Teil einer den Wassereinlässen 2 und dem Mischwasserauslaß 5 zugeordnete Durchtritte 22, 23 aufweisenden Sensorplatte 24 ist. Die Sensorplatte 24 wirkt bei einer Einhebelmischarmatur gewissermaßen als Zwischenlage zwischen der Kartusche 7 und dem Gehäuse 12, so daß an sich an der Wassermischarmatur 1 als solcher besonders wenig geändert werden muß. Die Abmessungen der Sensorplatte 24 müssen natürlich auf die Abmessungen der entsprechenden Wassermischarmatur 1 abgestimmt werden. Für die üblichen Einhebelmischarmaturen hat sich eine Dicke der Sensorplatte 24 von 4 bis 7 mm, vorzugsweise eine Dicke von ca. 5,5 mm, und ein Durchmesser von ca. 48 mm als besonders passend erwiesen.

Wie die voranstehenden Erläuterungen deutlich machen, durch strömt sowohl das einströmende Wasser als auch das ausströmende Mischwasser die Sensorplatte 24, die also der Abdichtung gegenüber der Kartusche 7 einerseits und dem Gehäuse 12 andererseits bedarf. Der Abdichtung gegenüber der Kartusche 7 dienen üblicherweise an der Unterseite der Kartusche 7 die Wassereinlässe 2 und den Mischwasserauslaß 5 umgebende Dichtringe. Für die Abdichtung gegenüber dem Gehäuse 12 ist die Sensorplatte 24 nach bevorzugter Lehre der Erfindung auf der Unterseite mit die Durchtritte 22, 23 umgebenden Aufnahmenuten 25 für Dichtringe 26 versehen. Natürlich können entsprechende Aufnahmenuten auch auf der Oberseite der Sensorplatte 24 vorgesehen sein, wenn dies aus konstruktiven Gründen zweckmäßig ist. Das zeigen die Fig. 5 bis 7 besonders deutlich. Die Fig. 5 bis 7 zeigen ferner, daß es besonders zweckmäßig ist, wenn die Sensorplatte 24 eine radial zu dem dem Mischwasserauslaß 5 zugeordneten Durchtritt 23 verlaufende, vom Rand der Sensorplatte 24 bis in den Durchtritt 23 reichende Aufnahmebohrung 27 für den Temperatursensor 14 aufweist und der Temperatursensor 14 in die Aufnahmebohrung 27 abdichtend einsetzbar ist. Das in der Zeichnung dargestellte bevorzugte Ausführungsbeispiel macht dabei deutlich, daß es besonders zweckmäßig ist, wenn der Temperatursensor 14 mit einem Außengewinde 28 und die Aufnahmebohrung 27 mit einem entsprechenden Innengewinde 29 versehen sind und daß vorzugsweise zwischen einer umlaufenden Dichtfläche 30 am Temperatursensor 14 und einer umlaufenden Dichtfläche 31 in der Aufnahmebohrung 27 ein Dichtelement 32 angeordnet ist.

In den Fig. 5 und 6 ist noch erkennbar, daß Durchgangsbohrungen 33 für Befestigungsschrauben vorgesehen sind, und zwar für Befestigungsschrauben, die an sich der Befestigung der Kartusche 7 im Gehäuse 12 dienen. Fig. 7 läßt gut erkennen, daß der Temperatursensor 14 auf der den Außenrand der Sensorplatte 24 zugewandten Seite mit einem Schraubendreherschlitz 34 versehen ist, so daß er ohne weiteres in die Aufnahmebohrung 27 eingeschraubt werden kann. Auch andere Betätigungsausformungen sind hier natürlich denkbar.

Fig. 4 läßt ein besonderes Ausführungsbeispiel der erfindungsgemäßen Wassermischarmatur 1 erkennen, bei dem nämlich die Sensorplatte 24 einen Ansatzteil 35 trägt, der die Temperaturmeßschaltung 13 aufnimmt. Im hier dargestellten Ausführungsbeispiel ist der Ansatzteil 35 auf der von dem Betätigungsende des Betätigungsorgans 11 abgewandten Seite bogenförmig nach oben geführt und trägt am oberen Ende die Mischtemperaturanzeige 16 in einer für eine betätigende Person sehr gut sichtbaren Weise. Eine Alternative zu dieser Ausführungsform, die zeichnerisch nicht dargestellt ist, besteht darin, daß der Ansatzteil eine Steckfassung zum Aufstecken der Mischtemperaturanzeigt trägt. Hierbei ist die Mischtemperaturanzeige von Ansatzteil getrennt, jedoch mit dem Ansatzteil steckbar verbindbar.

Das in Fig. 4 dargestellte Ausführungsbeispiel einer erfindungsgemäßen Wassermischarmatur 1 bedarf einer angepaßten Gesamtkonstruktion des Gehäuses 12, insbesondere wegen des nach hinten herausgeführten Ansatzteils 35. Besonders zweckmäßig ist es naturlich, wenn die Gesamtkonstruktion einer Wassermischarmatur 1 ohne Mischtemperaturanzeige im wesentlichen beibehalten werden kann. Wie das möglich ist, wird nachfolgend im einzelnen erläutert.

Fig. 1 zeigt die Wassermischtemperatur 1 in der Ausführungsform als Einhebelmischarmatur, bei der das Betätigungsorgan 11 in an sich bekannter Weise auf der Oberseite eine Abdeckkappe trägt. Nach bevorzugter und insoweit selbständiger Lehre der Erfindung ist nun diese Abdeckkappe als pultartiger, die Mischtemperaturanzeige 16 aufnehmender Aufsatzteil 36 ausgebildet und über Leitungen 37 mit dem Temperatursensor 14 bzw. mit der Sensorplatte 24 verbunden bzw. verbindbar. Mit Hilfe von Rastverbindungen 38 ist im dargestellten Ausführungsbeispiel der Aufsatzteil 36 praktisch in gleicher Weise wie die ansonsten verwendete Abdeckkappe auf das Betätigungsorgan 11 aufrastbar. Natürlich sind auch andere Verbindungstechniken hier möglich.

Fig. 1 zeigt andeutungsweise, Fig. 10 in noch deutlicherer Darstellung, daß nach bevorzugter Lehre der Erfindung der Aufsatzteil 36 Anschlußkörper 39 zum lösbaren Anschluß der elektrischen Leitungen 37 aufweist. Die Anschlußkörper 39 sind im hier dargestellten Ausführungsbeispiel als Steckbuchsen ausgebildet; dementsprechend sind die zugeordneten Enden der Leitungen 37 mit Steckern versehen. Auch andere Ausgestaltungen, beispielsweise als Federkraftklemmen od. dgl. sind naturlich für die Anschlußkörper 39 denkbar. Die Anschlußkörper 39 sind im übrigen nach bevorzugter Lehre der Erfindung je Leitung 37 separat ausgeführt und in besonderer Weise gegen Feuchtigkeit und Spritzwasser geschützt, so daß sich zwischen den Anschlußkörpern 39, d. h. den Leitungen 37, keine Kurzschlußbrücken bilden können.

In dem in Fig. 1 dargestellten Ausführungsbeispiel einer erfindungsgemäßen Wassermischarmatur 1, deren Aufsatzteil in Fig. 10 vergrößert dargestellt ist, ist die Temperaturmeßschaltung 13 im Aufsatzteil 36 angeordnet. Auf der Oberseite des Aufsatzteils 36 ist neben der Mischtemperaturanzeige 16 auch die Solarzelle 18 angeordnet. Im hier dargestellten Ausführungsbeispiel ist das eine Solarzellengruppe Angedeutet ist auch noch die Batterie 17 in einer üblichen Klemmfassung.

Die Fig. 8 und 9 machen deutlich, daß die Keilform des Aufsatzteils 36, die in den Fig. 1 und 10 schon deutlich zu erkennen ist, für die gute Erkennbarkeit der Mischtemperaturanzeige 16 von Bedeutung ist. Fig. 8 zeigt die Wassermischarmatur 1 in der Anordnung und Ausgestaltung für ein Waschbecken. Angedeutet ist hier die Blickrichtung einer betätigenden Person durch eine gestrichelte Linie. Wesentlich ist, daß die Oberseite des Aufsatzteils 36 durch die keilförmige Ausbildung des Aufsatzteils 36 in Blickrichtung der betätigenden Person geeignet ist. In dem in Fig. 8 dargestellten Anwendungsfall ist die Neigung nach vorn zum Betätigungsende des Betätigungsorgans 11 hin gewählt. Die Realisierung der Neigung durch die keilförmige Ausbildung des Aufsatzteils 36 hat den Vorteil, daß durch Umsetzen des Aufsatzteils 36 diese Neigung geändert werden kann. Das wäre nicht der Fall, wenn die Neigung durch eine Gestaltung des Betätigungsorgans 11 an der Oberseite selbst realisiert würde. Fig. 9 zeigt den Gegenstand aus Fig. 8 mit umgesetztem Aufsatzteil 36 in der Anordnung an der Wand einer Duschkabine. Die Blickrichtung der Betätigungsperson ist entsprechend angedeutet.

Die Fig. 1 und 8 bis 10 machen deutlich, daß der Neigungswinkel der Oberseite des Aufsatzteils 36 nach bevorzugter Lehre der Erfindung bei in Schließstellung befindlichem Betätigungsorgan 11 etwa 80 bis 50°, vorzugsweise ca. 70°, bezogen auf die Hauptachse 40 der Wassermischarmatur 1 beträgt.

Fig. 10 läßt schließlich noch erkennen, daß nach bevorzugter Lehre der Erfindung der Aufsatzteil 36 eine ringförmige, nach oben offene, vorzugsweise auf das Betätigungsorgan 11 aufrastbare Fassung 41 und einen in die Fassung 41 abdichtend einsetzbaren Elektronikmodul 42 aufweist. Dieser Elektronikmodul 42 ist gegenüber der Fassung 41 über einen umlaufenden Dichtring 43 abgedichtet und durch eine durchsichtige Kunststofkappe 44 abgedeckt. Vom Elektronikmodul 42 führen Verbindungsleitungen 45 zu den Anschlußkörpern 39.

Fig. 1 läßt im Zusammenhang erkennen, wie die Leitungen 37 von der Sensorplatte 24 aus im Inneren der Wassermischarmatur 1 nach oben zum Aufsatzteil 36 geführt sind. Verblüffend ist dabei, mit welchen geringen Änderungen an der bekannten Einhebelmischarmatur man auskommt. Man muß lediglich die Sensorplatte 24 zwischen Kartusche 7 und Gehäuse 12 einlegen, die Leitungen 37 zur Oberseite des Betätigungsorgans 11 hin durchziehen, die Abdeckkappe des Betätigungsorgans 11 durch den Aufsatzteil 36 ersetzen und die Leitungen 37 mit den Anschlußkörpern 39 am Aufsatzteil 36 verbinden. Mit diesen wenigen Handgriffen ist dann aus einer Einhebelmischarmatur ohne Temperaturmeßschaltung eine solche mit Temperaturmeßschaltung geworden.

**Patentansprüche**

1. Wassermischarmatur, insbesondere Einhebelmischarmatur, mit einerseits zwei Wassereinlässen (2), zwei Wassereinlaßventilen (3), einer Mischkammer (4), einem Mischwasserauslaß (5), ggf. einem Wasserauslaßventil und mindestens einem Betätigungsorgan (8), für die Wassereinlaßventile und ggf. das Wasserauslaßventil und mit andererseits einer elektronischen Temperaturmeßschaltung (13), wobei die Temperaturmeßschaltung einen im Mischwasserauslaß (5) angeordneten Temperatursensor (14), eine Mischtemperaturanzeige (16) und eine Stromquelle, z. B. eine Batterie (17) oder einen Akkumulator, aufweist, dadurch gekennzeichnet, daß die Temperaturmeßschaltung (13) zusätzlich zu der als Batterie (17) oder Akkumulator ausgeführten ersten Stromquelle eine Solarzelle (18) oder mehrere Solarzellen als weitere Stromquelle aufweist und oberhalb eines vorgegebenen oberen Helligkeitsgrenzwertes nur die Solarzelle (18) als Stromquelle für die Temperaturmeßschaltung (13) wirksam ist.

2. Wassermischarmatur nach Anspruch 1, dadurch gekennzeichnet, daß unterhalb eines vorgegebenen mittleren Helligkeitsgrenzwertes nur die Batterie (17) bzw. der Akkumulator als Stromquelle für die Temperaturmeßschaltung (13) wirksam ist.

3. Wassermischarmatur nach Anspruch 1 oder 2, dadurch gekennzeichnet, daß unterhalb eines vorgegebenen unteren Helligkeitsgrenzwertes weder die Solarzelle (18) noch die Batterie (17) bzw. der Akkumulator als Stromquelle für die Temperaturmeßschaltung (13) wirksam sind.

4. Wassermischarmatur nach einem der Ansprüche 1 bis 3, dadurch gekennzeichnet, daß ein die Mischtemperaturanzeige (16) und ggf. die Temperaturmeßschaltung (13) insgesamt ein- und ausschaltender, die Stellung der Wassereinlaßventile (2) und/oder des Wasserauslaßventils (6) und/oder des Betätigungsorgans (11) abtastender, elektromechanischer Hauptschalter vorgesehen ist.

5. Wassermischarmatur nach Anspruch 4 in der Ausführung als Einhebelmischarmatur, dadurch gekennzeichnet, daß der elektromechanische Hauptschalter die Kippstellung eines als Betätigungsorgan (11) dienenden Dreh- und Kipphebels abtastet.

6. Wassermischarmatur nach einem der Ansprüche 1 bis 5, dadurch gekennzeichnet, daß durch die Solarzelle auch eine Nachladung des Akkumulators erfolgt.

7. Wassermischarmatur nach einem der Ansprüche 1 bis 6, dadurch gekennzeichnet, daß die Mischtemperaturanzeige (16) als Flüssigkristall oder Leuchtdioden-Ziffernanzeige ausgebildet ist.

8. Wassermischarmatur nach einem der Ansprüche 1 bis 7, in einer Ausführungsform für Badewannen od. dgl., dadurch gekennzeichnet, daß an die Temperaturmeßschaltung ein den Wasserstand in der Badewanne od. dgl. abtastender, einen Soll-Wasserstand vorgebender Wasserstandsensor angeschlossen und von der Temperaturmeßschaltung bei Erreichen des Soll-Wasserstands ein akustisches Warnsignal, ein Schaltsignal od. dgl. abgebbar ist.

9. Wassermischarmatur einem der Ansprüche 1 bis 8, dadurch gekennzeichnet, daß der Temperatursensor (14) in einem den Mischwasserauslaß (5) umgebenden, vorzugsweise nächst der Mischkammer (4) angeordneten Ring eingesetzt ist.

10. Wassermischarmatur nach Anspruch 9 in der Ausführungsform als Einhebelmischarmatur, dadurch gekennzeichnet, daß der Ring Teil einer den Wassereinlässen (2) und dem Mischwasserauslaß (5) zugeordnete Durchtritte (22, 23) aufweisenden Sensorplatte (24) ist.

11. Wassermischarmatur nach Anspruch 10, dadurch gekennzeichnet, daß die Sensorplatte (24) eine Dicke von ca. 4 bis 7 mm, vorzugsweise von ca. 5,5 mm, und einen Durchmesser von ca. 48 mm aufweist.

12. Wassermischarmatur nach Anspruch 10 oder 11, dadurch gekennzeichnet, daß die Sensorplatte (24) auf der Unterseite und/oder auf der Oberseite mit die Durchtritte (22, 23) umgebenden Aufnahmenuten (25) für Dichtringe (26) od. dgl. versehen ist.

13. Wassermischarmatur nach einem der Ansprüche 9 bis 12, dadurch gekennzeichnet, daß der Ring bzw. die Sensorplatte (24) eine radial zu dem dem Mischwasserauslaß (5) zugeordneten Durchtritt (23) verlaufende, vom Rand des Rings bzw. der Sensorplatte (24) bis in den Durchtritt (23) reichende Aufnahmebohrung (27) für den Temperatursensor (14) aufweist und der Temperatursensor (14) in die Aufnahmebohrung (27) abdichtend einsetzbar ist.

14. Wassermischarmatur nach Anspruch 13, dadurch gekennzeichnet, daß der Temperatursensor (14) mit einem Außengewinde (28) und die Aufnahmebohrung (27) mit einem entsprechenden Innengewinde (29) versehen sind und daß vorzugsweise zwischen einer umlaufenden Dichtfläche (30) am Temperatursensor (14) und einer umlaufenden Dichtfläche (31) in der Aufnahmebohrung (27) ein Dichtelement (32) angeordnet ist.

15. Wassermischarmatur nach einem der Ansprüche 9 bis 14, dadurch gekennzeichnet, daß der Ring bzw. die Sensorplatte (24) einen die Temperaturmeßschaltung (13) und ggf. auch die Hischtemperaturanzeige (16) aufnehmenden Ansatzteil (35) trägt.

16. Wassermischarmatur nach Anspruch 15, dadurch gekennzeichnet, daß der Ansatzteil (35) auf der von dem Betätigungsende des Betätigungsorgans (11) abgewandten Seite nach oben geführt ist.

17. Wassermischarmatur nach Anspruch 16, dadurch gekennzeichnet, daß der Ansatzteil (35) am oberen Ende (für eine betätigende Person gut sichtbar) die Mischtemperaturanzeige (16 ) trägt.

18. Wassermischarmatur nach Anspruch 16, dadurch gekennzeichnet, daß der Ansatzteil, ggf. am oberen Ende, eine Steckfassung zum Aufstecken der Mischtemperaturanzeige trägt.

19. Wassermischarmatur nach einem der Ansprüche 1 bis 18 in der Ausführungsform als Einhebelmischarmatur, wobei das Betätigungsorgan auf der Oberseite eine Abdeckkappe trägt, dadurch gekennzeichnet, daß die Abdeckkappe als pultartiger, die Mischtemperaturanzeige (16) aufnehmender Aufsatzteil (36) ausgebildet und über elektrische Leitungen (37) mit dem Temperatursensor (14) bzw. mit der Sensorplatte (24) verbunden bzw. verbindbar ist.

20. Wassermischarmatur nach Anspruch 19, dadurch gekennzeichnet, daß der Aufsatzteil (36) auf das Betätigungsorgan (11) aufrastbar ist.

21. Wassermischarmatur nach Anspruch 19 oder 20, dadurch gekennzeichnet, daß der Aufsatzteil (36) Anschlußkörper (39) zum lösbaren Anschluß der elektrischen Leitungen (37) aufweist.

22. Wassermischarmatur nach einem der Ansprüche 19 bis 21, dadurch gekennzeichnet, daß die Temperaturmeßschaltung (13) im Aufsatzteil (36) angeordnet ist.

23. Wassermischarmatur nach Anspruch 22, dadurch gekennzeichnet, daß auf der Oberseite des Aufsatzteils (36) neben der Mischtemperaturanzeige (16) auch die Solarzelle (18) angeordnet ist.

24. Wassermischarmatur nach einem der Ansprüche 19 bis 23, dadurch gekennzeichnet, daß die Oberseite des Aufsatzteils (36), vorzugsweise durch eine keilförmige Ausbildung des Aufsatzteils (36), in Blickrichtung einer betätigenden Person geneigt ist.

25. Wassermischarmatur nach Anspruch 24, dadurch gekennzeichnet, daß der Aufsatzteil (36) in zwei um 180° gegeneinander versetzten Richtungen auf das Betätigungsorgan (11) aufrastbar ist.

26. Wassermischarmatur nach Anspruch 24 oder 25, dadurch gekennzeichnet, daß der Neigungswinkel der Oberseite des Aufsatzteils (36) bei in Schließstellung befindlichem Betätigungsorgan (11) etwa 80 bis 50°, vorzugsweise ca. 70°, zur Hauptachse (40) der Wassermischarmatur (1) beträgt.

27. Wassermischarmatur nach einem der Ansprüche 19 bis 26, dadurch gekennzeichnet, daß der Aufsatzteil (36) eine ringförmige, nach oben offene, vorzugsweise auf das Betätigungsorgan (11) aufrastbare Fassung (41) und einen in die Fassung (41) abdichtend einsetzbaren Elektronikmodul (42) aufweist.

## Claims

1. Water mixing fitting, particularly a single-lever mixing fitting with, on the one hand, two water inlets (2), two water inlet valves (3), a mixing chamber (4), a mixed water outlet (5), possibly a water outlet valve and at least one actuating mechanism (8) for the water inlet valves and possibly the water outlet valve and with, on the other hand, an electronic temperature measuring circuit (13), wherein the temperature measuring circuit has a temperature sensor (14) arranged in the mixed water outlet (5), a mixed temperature indicator (16) and a source of current, eg. a battery (17) or an accumulator, characterised in that the temperature measuring circuit (13) has, in addition to the first source of current designed as a battery (17) or accumulator, a solar cell (18) or several solar cells as further source of current and above a predetermined upper brightness limiting value only the solar cell (18) is effective as current source for the temperature measuring circuit (13).

2. Water mixing fitting according to claim 1, characterised in that below a predetermined middle brightness limiting value only the battery (17) or the accumulator is effective as source of current for the temperature measuring circuit (13).

3. Water mixing fitting according to claim 1 or 2, characterised in that below a predetermined lower brightness limiting value neither the solar cell (18) or the battery (17) or the accumulator are effective as source of current for the temperature measuring circuit (13).

4. Water mixing fitting according to one of claims 1 to 3, characterised in that an electromechanical main switch is provided connecting and disconnecting as a whole the mixed temperature indicator (16) and possibly the temperature measuring circuit (13) and picking up the position of the water inlet valves (2) and/or the water outlet valve (6) and/or the actuating mechanism (11).

5. Water mixing fitting according to claim 4 in the embodiment as a single-lever mixing fitting, characterised in that the electromechanical main switch picks up the tilted position of a twisting and tilting lever serving as actuating mechanism (11).

6. Water mixing fitting according to one of claims 1 to 5, characterised in that recharging of the accumulator also occurs through the solar cell.

7. Water mixing fitting according to one of claims 1 to 6, characterised in that the mixing temperature indicator (16) is constructed as a liquid crystal or light emitting diode digital display.

8. Water mixing fitting according to one of claims 1 to 7 in an embodiment for bath tubs or the like, characterised in that attached to the temperature measuring circuit there is a water level sensor picking up the water level in the bath or the like, predetermining a desired water level and an acoustic signal, switching signal or the like is able to be delivered from the temperature measuring circuit when reaching the desired water level.

9. Water mixing fitting according to one of claims 1 to 8, characterised in that the temperature sensor (14) is inserted in a ring, surrounding the mixed water outlet (5), arranged preferably next to the mixing chamber (4).

10. Water mixing fitting according to claim 9 in the embodiment as a single-lever mixing fitting, characterised in that the ring is part of a sensor plate (24) having passages (22, 23) assigned to the water inlets (2) and mixed water outlet (5).

11. Water mixing fitting according to claim 10, characterised in that the sensor plate (24) has a thickness of approximately 4 to 7 mm, preferably of approximately 5.5 mm and a diameter of approximately 48 mm.

12. Water mixing fitting according to one of claims 10 or 11, characterised in that the sensor plate (24) is equipped on the lower side and/or upper side with receiving grooved (25) surrounding the passages (22, 23), for sealing rings (26), or the like.

13. Water mixing fitting according to one of claims 9 to 12, characterised in that the ring or the sensor plate (24) has a receiving bore (27) for the temperature sensor (14) extending radially to the passage (23) assigned to the mixed water outlet (5) and reaching from the edge of the ring or the sensor plate (24) into the passage (23), and the temperature sensor (14) is able to be inserted in a sealing manner in the receiving bore (27).

14. Water mixing fitting according to claim 13, characterised in that the temperature sensor (14) is equipped with an external thread (28) and the receiving bore (27) with a corresponding internal thread (29) and in that arranged preferably between a rotating sealing surface (30) on the temperature sensor (14) and a rotating sealing surface (31) in the receiving bore (27) there is a sealing element (32).

15. Water mixing fitting according to one of claims 9 to 14, characterised in that the ring or the sensor plate (24) carries a projecting part receiving the temperature measuring circuit (13) and possibly also the mixed temperature indicator (16).

16. Water mixing fitting according to claim 15, characterised in that the projecting part (35) on the side turned away from the actuating end of the actuating mechanism (11) is led upwards.

17. Water mixing fitting according to claim 16, characterised in that the projecting part (35) on the upper end (easily visible for the operator) carries the mixed temperature indicator (16).

18. Water mixing fitting according to claim 16, characterised in that the projecting part, possibly on the upper end, carries a plug-in socket for attaching the mixed temperature indicator.

19. Water mixing fitting according to one of claims 1 to 18 in the embodiment as a single-lever mixing fitting, wherein the actuating mechanism carries on the upper side a covering lid, characterised in that the covering lid is formed as a cap part (36), lectern-shaped, receiving the mixed temperature indicator (16) and is connected or able to be connected to the temperature sensor (14) or to the sensor plate (24) by way of electric lines (37).

20. Water mixing fitting according to claim 19, characterised in that the cap part (36) is able to be locked on the actuating mechanism (11).

21. Water mixing fitting according to claim 19 or 20, characterised in that the cap part (36) has a connection body (39) for releasable connection of the electric lines (37).

22. Water mixing fitting according to one of claims 19 to 21, characterised in that the temperature measuring circuit (13) is arranged in the cap part (36).

23. Water mixing fitting according to claim 22, characterised in that the solar cell (18) is also arranged on the upper side of the cap part (36) next to the mixed temperature indicator (16).

24. Water mixing fitting according to one of claims 19 to 23, characterised in that the upper side of the cap part (36) is at an incline to the line of vision of the operator, preferably by a wedge-like formation of the cap part (36).

25. Water mixing fitting according to claim 24, characterised in that the cap part (36) is able to lock on the actuating mechanism (11) in two directions staggered at 180°.

26. Water mixing fitting according to claim 24 or 25 characterised in that the angle of inclination of the upper side of the cap part (36) is, with the actuating mechanism (11) in a closed position, approximately 80 to 50°, preferably 700, to the main axis (40) of the water mixing fitting (1).

27. Water mixing fitting according to one of claims 19 to 26, characterised in that the cap part (36) has an annular support (41), open in an upward direction, preferably able to lock on the actuating mechanism (11) and an electronic module (42) able to be inserted in a sealing manner in to the support (41).

**Revendications**

1. Robinet mitigeur, en particulier robinet mélangeur à levier unique, comportant, d'une part, deux arrivées d'eau (2), deux soupapes d'admission d'eau (3), une chambre de mélange (4), une sortie d'eau mélangée (5), le cas échéant une soupape de sortie d'eau et au moins un organe de manoeuvre (8) pour les soupapes d'admission d'eau et, le cas échéant, pour la soupape de sortie d'eau et, d'autre part, un circuit électronique de mesure de température (13), ce circuit présentant une sonde de température (14) agencée dans la sortie (5) du mélange d'eau, un indicateur (16) de température du mélange et une source de courant comme par exemple une pile (17) ou un accumulateur, caractérisé en ce que le circuit (13) de mesure de température présente, outre la première source de courant constituée d'une pile (17) ou d'un accumulateur, une cellule solaire (18) ou plusieurs cellules solaires comme source de courant supplémentaire et seule la cellule solaire (18) est active comme source de courant pour le circuit (13) de mesure de température, au-delà d'une valeur prédéterminée, limite supérieure de luminosité.

2. Robinet mitigeur suivant la revendication 1, caractérisé en ce qu'en dessous d'une valeur prédéterminée moyenne de luminosité, seule la pile (17) ou bien l'accumulateur est actif comme source de courant pour le circuit (13) de mesure de température.

3. Robinet mitigeur suivant l'une des revendications 1 ou 2, caractérisé en ce qu'en dessous d'une valeur prédéterminée, limite inférieure de luminosité, ni la cellule solaire (18), ni la pile (17) ou bien l'accumulateur ne sont actifs comme source de courant pour le circuit (13) de mesure de température.

4. Robinet mitigeur suivant l'une quelconque des revendications 1 à 3, caractérisé en ce qu'on a prévu un interrupteur électromécanique principal, qui détecte la position des soupapes d'admission d'eau (2) et/ou de la soupape de sortie d'eau (6) et/ou de l'organe de manoeuvre (11), et qui tout à la fois active ou éteint l'indicateur de température (16) du mélange et, le cas échéant, le circuit (13) de mesure de température.

5. Robinet mitigeur suivant la revendication 4, se présentant sous la forme d'un robinet mitigeur à levier unique, caractérisé en ce que l'interrupteur électromécanique principal détecte la position de basculement d'un levier à tourner et à basculer servant d'organe de manoeuvre.

6. Robinet mitigeur suivant l'une quelconque des revendications 1 à 5, caractérisé en ce qu'un rechargement de l'accumulateur est effectué également au moyen de la cellule solaire.

7. Robinet mitigeur suivant l'une quelconque des revendications 1 à 6, caractérisé en ce que l'indicateur (16) de température du mélange est formé par un affichage numérique à cristaux liquides ou à diodes électroluminescentes.

8. Robinet mitigeur suivant l'une quelconque des revendications 1 à 7, sous la forme d'un modèle adapté aux baignoires ou similaires, caractérisé en ce qu'un détecteur de niveau d'eau avec consigne du niveau à atteindre palpant le niveau de l'eau dans la baignoire ou similaire, est connecté au circuit de mesure de température, ce circuit pouvant donner un signal sonore, un signal de commande ou analogue lorsque le niveau désiré est atteint.

9. Robinet mitigeur suivant l'une quelconque des revendications 1 à 8, caractérisé en ce que la sonde de température (14) est incorporée dans une rondelle entourant la sortie (5) d'eau mélangée et agencée de préférence le plus près possible de la chambre de mélange (4).

10. Robinet mitigeur suivant la revendication 9, sous la forme d'un modèle de robinet à levier unique, caractérisé en ce que la pièce en forme de rondelle est une sonde en forme de plaque (24) présentant des passages (22, 23) en rapport avec chacune des entrées d'eau (2) et avec la sortie (5) d'eau mélangée.

11. Robinet mitigeur suivant la revendication 10, caractérisé en ce que la sonde en forme de plaque (24) présente une épaisseur d'environ 4 à 7 mm, et de préférence de 5,5 mm environ, et un diamètre d'environ 48 mm.

12. Robinet mitigeur suivant l'une des revendications 10 ou 11, caractérisé en ce que la sonde en forme de plaque (24) est pourvue, sur sa face inférieure et/ou sur sa face supérieure, de rainures circulaires (25) entourant les passages (22, 23) destinées à recevoir des joints d'étanchéité (26) ou analogues.

13. Robinet mitigeur suivant l'une quelconque des revendications 9 à 12, caractérisé en ce que la rondelle ou bien la sonde en forme de plaque (24) présente, pour la sonde de température (14), un perçage radial (27) aboutissant dans le passage (23) correspondant à la sortie du mélange d'eau (5), partant du bord extérieur de la rondelle ou de ladite sonde (24) pour déboucher dans le passage (23), la sonde de température (14) pouvant être insérée de façon étanche dans ce perçage (27).

14. Robinet mitigeur suivant la revendication 13, caractérisé en ce que la sonde de température (14) est pourvue d'un filetage extérieur (28) et que le perçage (27) est pourvu d'un taraudage intérieur (29) correspondant et que, de préférence, un élément d'étanchéité (32) est disposé entre une face d'étanchéité circulaire (30) de la sonde (14) de température et une face d'étanchéité circulaire (31) prévue dans le taraudage (27).

15. Robinet mitigeur suivant l'une quelconque des revendications 9 à 14, caractérisé en ce que la rondelle ou bien la sonde en forme de plaque (24) supporte une pièce rapportée (35) qui contient le circuit (13) de mesure de température et, le cas échéant, également l'indicateur (16) de température du mélange.

16. Robinet mitigeur suivant la revendication 15, caractérisé en ce que la pièce rapportée (35) est dirigée vers le haut, du côté opposé par rapport à l'extrémité de manoeuvre de l'organe de manoeuvre (11).

17. Robinet mitigeur suivant la revendication 16, caractérisé en ce que la pièce rapportée (35) porte l'indicateur (16) de température du mélange à son extrémité supérieure (bien en vue pour une personne manoeuvrant le robinet).

18. Robinet mitigeur suivant la revendication 16, caractérisé en ce que la pièce rapportée porte, éventuellement à son extrémité supérieure, une prise de courant afin d'y enficher l'indicateur de température du mélange.

19. Robinet mitigeur suivant l'une quelconque des revendications 1 à 18, sous la forme d'un modèle de robinet à levier unique dont l'organe de manoeuvre porte une coiffe de couverture a sa face supérieure, caractérisé en ce que ladite coiffe est développée comme un élément appliqué (36) ayant la forme d'un pupitre et contenant l'indicateur (16) de température du mélange, la coiffe étant reliée ou pouvant être reliée par des conducteurs électriques (37) à la sonde de température (14) ou bien à la sonde en forme de plaque (24).

20. Robinet mitigeur suivant la revendication 19, caractérisé en ce que l'élément appliqué peut être encliqueté sur l'organe de manoeuvre (11).

21. Robinet mitigeur suivant l'une des revendications 19 ou 20, caractérisé en ce que le capot (36) présente des éléments de connexion permettant un raccordement détachable des conducteurs électriques (37).

22. Robinet mitigeur suivant l'une quelconque des revendications 19 à 21, caractérisé en ce que le circuit (l3) de mesure de température est agencé dans l'élément appliqué (36).

23. Robinet mitigeur suivant la revendication 22, caractérisé en ce que la cellule solaire (18) est aussi disposée sur la face supérieure de l'élément appliqué (36), près de l'indicateur (16) de température du mélange.

24. Robinet mitigeur suivant l'une quelconque des revendications 19 à 23, caractérisé en ce que la face supérieure de l'élément appliqué (36) est inclinée dans la direction du regard d'une personne actionnant ledit robinet, de préférence grâce à un développe ment en forme de coin de l'élément appliqué (36).

25. Robinet mitigeur suivant la revendication 24, caractérisé en ce que l'élément appliqué (36) peut être encliqueté sur l'organe de manoeuvre (11) suivant deux orientations décalées l'une par rapport à l'autre de 180°.

26. Robinet mitigeur suivant l'une des revendications 24 ou 25, caractérisé en ce que l'angle d'inclinaison de la face supérieure de l'élément appliqué (36) par rapport à l'axe principal (40) dudit robinet a une valeur comprise entre 80° et 50° et, de préférence, d'environ 70°, l'organe de manoeuvre se trouvant en position de fermeture.

27. Robinet mitigeur suivant l'une quelconque des revendications 19 à 26, caractérisé en ce que l'élément appliqué (36) presente, d'une part, un boîtier (41) de forme circulaire, ouvert par le haut, qui peut être encliqueté sur l'organe de manoeuvre (11) et, d'autre part, un module électronique (42) qui peut être installé dans ledit boîtier (41) de manière étanche.

Fig.1

Fig.2

Fig.3

Fig.4

Fig.5

Fig.6

Fig.7

Fig.10

Fig.8

Fig.9